# EUROPEAN PATENT APPLICATION

(11) **EP 4 145 170 A1**
(43) Date of publication of application: **08.03.2023**
(21) Application number: 21797470.8
(22) Date of filing: 19.04.2021
(51) Int. Cl.: G01S 7/481, G01S 17/10, G01S 17/89

(54) **RANGING DEVICE**

(30) Priority: 27.04.2020 JP 2020078306
(71) Applicant: Sony Semiconductor Solutions Corporation, Atsugi-shi Kanagawa 243-0014 (JP)
(72) Inventor: SUZUKI Shunpei, Atsugi-shi, Kanagawa 243-0014 (JP); KADO Takahiro, Atsugi-shi, Kanagawa 243-0014 (JP)
(74) Representative: MFG Patentanwälte Meyer-Wildhagen Meggle-Freund Gerhard PartG mbB
(86) International application number: PCT/JP2021/015844
(87) International publication number: WO 2021/220862

(57) **Abstract**

Downsizing is possible, and a distance measurement range can be expanded while satisfying a safety standard of laser beam.

A distance measuring device includes a light projection unit that emits light in a two-dimensional manner, a light receiving unit including a plurality of light receiving elements arranged in a two-dimensional direction, and a control unit that controls whether or not to perform light reception by the plurality of light receiving elements.

## Description

### TECHNICAL FIELD

The present disclosure relates to a distance measuring device.

### BACKGROUND ART

For automated driving, face authentication, depth information detection, and the like, attention has been paid to a technique of measuring a distance in a non-contact manner using a laser beam (for example, light detection and ranging: LiDAR). To measure a distance, it is desirable to be able to receive light in a range as wide as possible. For this reason, a time of flight (ToF) sensor has been developed in which a reflecting mirror is provided in a light receiving system to receive light in a wide range.

Recently, in smartphones or the like, examples of performing distance measurement using a ToF sensor for the purpose of face authentication, depth information detection, or the like are increasing. In a portable device such as a smartphone, the ToF sensor needs to be downsized as much as possible due to a limited mounting area.

For example, in a device disclosed in Patent Document 1, an optical configuration is downsized by using a MEMS mirror common to a light projection system and a light receiving system.

### CITATION LIST

### PATENT DOCUMENT

Patent Document 1: Japanese Patent Application Laid-Open No. 2015-210098

### SUMMARY OF THE INVENTION

### PROBLEMS TO BE SOLVED BY THE INVENTION

However, since the MEMS mirror has a small deflection angle and cannot increase the amount of received light, the distance measurement range is narrowed and it is difficult to distinguish the laser beam from noise light, which causes a problem that the distance measurement accuracy is lowered. Furthermore, a MEMS mirror capable of performing scanning with laser beams in a two-dimensional direction has a small deflection angle and is expensive, and is difficult to adopt in terms of cost.

Although it is conceivable to increase light intensity of the laser beam incident on the MEMS mirror, there is a possibility that a safety standard of the laser beam is not satisfied.

Meanwhile, an optical mirror such as a polygon mirror can increase a deflection angle, but downsizing is difficult and there is a concern about in-vehicle reliability.

Therefore, the present disclosure provides a distance measuring device that can be downsized and can expand a distance measurement range while satisfying a safety standard of laser beam.

### SOLUTIONS TO PROBLEMS

To solve the above-described problem, according to the present disclosure, a distance measuring device is provided, which includes:
a light projection unit that emits light in a two-dimensional manner;
a light receiving unit including a plurality of light receiving elements arranged in a two-dimensional direction; and
a control unit that controls whether or not to perform light reception by the plurality of light receiving elements.

The light projection unit may emit a linear beam extending in a first direction and cause the linear beam to scan a second direction.

The plurality of light receiving elements may be arranged in the first direction and the second direction, and
the control unit may sequentially switch the plurality of light receiving elements arranged in the first direction and the second direction to receive light.

The light projection unit may include
a light source unit that emits a laser beam,
an optical system that allows the laser beam to pass through, and
a micro electro mechanical system (MEMS) mirror that controls a traveling direction of the laser beam having passed through the optical system.

The MEMS mirror may control the traveling direction of the laser beam having passed through the optical system in a one-dimensional direction.

The light projection unit may include a light direction change member that changes a direction of the laser beam reflected by the MEMS mirror.

The direction of the laser beam reflected by the light direction change member may be parallel to the laser beam emitted from the light source unit.

The light projection unit may include a plurality of light source units arranged in a two-dimensional direction, and
each of the plurality of light source units may be capable of individually switching whether or not to emit a laser beam.

The control unit may individually control turning on or off of the plurality of light source units every predetermined period.

The light projection unit may include a first light projector and a second light projector arranged to be spaced apart along a predetermined direction, and
each of the first light projector and the second light projector emits a linear beam extending in a first direction and causes the linear beam to scan a second direction.

The first light projector and the second light projector may be arranged to be spaced apart in the predetermined direction such that the linear beam extending in the first direction from the first light projector and the linear beam extending in the first direction from the second light projector partially overlap each other.

The light receiving unit may be disposed at a position having a substantially equal distance from each of the first light projector and the second light projector.

Each of the first light projector and the second light projector may include
a light source unit that emits a laser beam,
an optical system that allows the laser beam to pass through, and
a MEMS mirror that controls a traveling direction of the laser beam having passed through the optical system.

An angle formed by a direction toward the first light projector and a direction toward the second light projector at a position of 100 mm along a center line of a line segment connecting the two MEMS mirrors may be 100 mrad or more.

Each of the first light projector and the second light projector may include a light direction change member that changes a direction of the laser beam reflected by the MEMS mirror.

The light direction change member may be a reflecting mirror having a reflecting surface with a fixed inclination angle.

Each of the first light projector and the second light projector may include a plurality of light source units arranged in a two-dimensional direction, and
each of the plurality of light source units may be capable of individually switching whether or not to emit a laser beam.

The light source unit may include a plurality of laser beam sources arranged in one direction, and
the MEMS mirror may cause the laser beam emitted from the plurality of laser beam sources to scan a direction different from an arrangement direction of the plurality of laser beams.

A beam shape of the laser beam emitted from the laser beam source may be an elliptical shape, and
the MEMS mirror may be rotated about a rotation axis extending along a minor axis direction of the elliptical shape.

The light receiving unit may receive reflected light obtained by reflecting the light emitted from the light projection unit by an object, and
the distance measuring device may further include: a distance measuring unit configured to measure a distance to the object by a time difference between time at which the light projection unit emits the light and time at which the light emitted from the light projection unit is reflected by the object and received by the light receiving unit.

### BRIEF DESCRIPTION OF DRAWINGS

Fig. 1 is a diagram illustrating a configuration of a main part of a distance measuring device according to a first embodiment.
Fig. 2 is a block diagram illustrating a schematic configuration of the distance measuring device according to the first embodiment.
Fig. 3 is a perspective view of a light projection unit and a light receiving unit.
Fig. 4A is a top view of the light projection unit and the light receiving unit.
Fig. 4B is a side view of the light projection unit and the light receiving unit as viewed from a positive side to a negative side in an X direction.
Fig. 5 is a view illustrating an example in which a minor axis direction of a beam spot of a laser beam is substantially parallel to a rotation axis of a MEMS mirror.
Fig. 6 is a view illustrating a traveling direction of the laser beam in the light projection unit.
Fig. 7 is a view for describing a positional relationship between the light projection unit and the light receiving unit.
Fig. 8 is a waveform chart illustrating an example of emission timing of laser beams emitted from two light projection units.
Fig. 9 is a diagram numerically illustrating an order in which a plurality of laser beam sources in the light source unit emits light.
Fig. 10 is a view schematically illustrating a case where average light intensity of each channel of the laser beam projected from the light projection unit is equal.
Fig. 11 is a diagram illustrating a main part of a distance measuring device according to a second embodiment.
Fig. 12 is a cross-sectional view illustrating an example of a cross-sectional structure of a light projection unit.

### MODE FOR CARRYING OUT THE INVENTION

Hereinafter, embodiments of a distance measuring device will be described with reference to the drawings. Hereinafter, main configuration parts of the distance measuring device will be mainly described, but the distance measuring device may have configuration parts and functions not illustrated or described. The following description does not exclude the configuration parts or functions not illustrated or described.

### (First Embodiment)

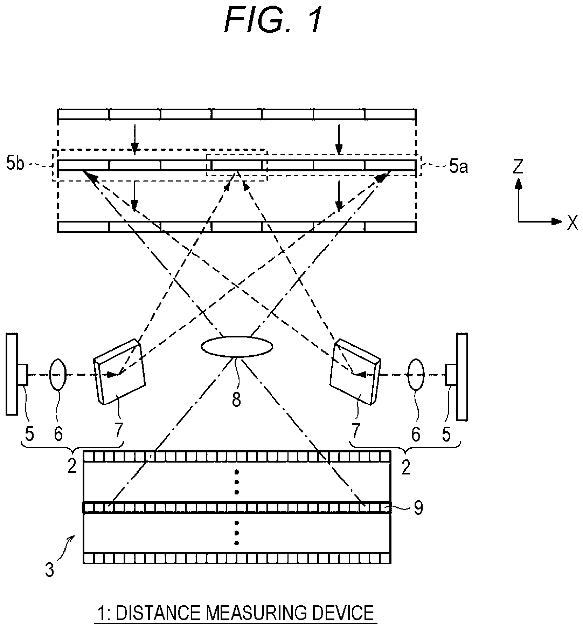

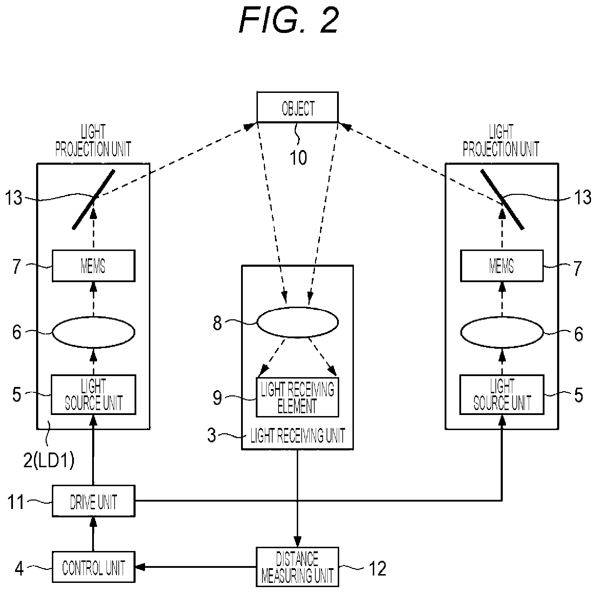

Fig. 1 is a diagram illustrating a configuration of a main part of a distance measuring device 1 according to the first embodiment. Fig. 2 is a block diagram illustrating a schematic configuration of the distance measuring device 1 according to the first embodiment.

As illustrated in Figs. 1 and 2, the distance measuring device 1 according to the first embodiment includes a light projection unit 2, a light receiving unit 3, and a control unit 4. In the distance measuring device 1, the light projection unit 2, the light receiving unit 3, and the control unit 4 may be mounted or housed on one substrate or housing or may be mounted or housed on separate substrates or housings. More specifically, for example, a substrate or a housing including the light projection unit 2 and the light receiving unit 3 and a substrate or a housing including the control unit 4 may be separately provided.

The light projection unit 2 emits light in a two-dimensional manner. The light to be emitted is, for example, coherent light having a uniform phase and frequency, that is, a laser beam. For example, a plurality of the light projection units 2 is provided. Figs. 1 and 2 illustrate an example in which two light projection units 2 (a first light projector LD1 and a second light projector LD2) are provided at an interval along an X direction. Internal configurations of the two light projection units 2 are the same.

The light projection unit 2 includes a light source unit 5, a light projection optical system 6, and a MEMS mirror 7. The light source unit 5 emits the laser beam. In the present embodiment, an example in which the light source unit 5 includes laser beam sources of a plurality of channels will be described. The laser beam source of each channel can individually control light emission timing and lights-out timing. The laser beam sources of the respective channels are arranged in one direction, and optical traces of the laser beams emitted from the laser beam sources of the respective channels become linear beams 5a and 5b. In the present embodiment, an example in which directions of the linear beams 5a and 5b are the X direction will be described.

The light projection optical system 6 includes one or a plurality of lenses for forming the laser beam emitted from the light source unit 5 into a desired divergence angle. The laser beam formed by the light projection optical system 6 is incident on the MEMS mirror 7.

The MEMS mirror 7 causes the laser beam to scan one-dimensional direction. By causing the MEMS mirror 7 to cause the laser beam to scan a direction (for example, an orthogonal direction) different from an arrangement direction of the laser beam sources in the light source unit 5, the light projection unit 2 can emit the laser beam in a two-dimensional manner. Since the light projection unit 2 according to the present embodiment can emit light in a two-dimensional manner without using an expensive MEMS mirror 7 that causes the laser beam to scan two-dimensional directions, the cost of the light projection unit 2 can be reduced. The MEMS mirror 7 has a rotation axis extending in a predetermined direction and rotates a mirror surface about the rotation axis, thereby causing the linear beam emitted from the light source unit 5 to scan the one-dimensional direction (for example, a Z direction in Fig. 1).

The light receiving unit 3 includes a light receiving optical system 8 and a plurality of light receiving elements 9 arranged in a two-dimensional direction. The light receiving optical system 8 allows reflected light to pass through, the reflected light being obtained such that the laser beam emitted from the light projection unit 2 is reflected and generated by an object 10. The reflected light having passed through the light receiving optical system 8 is incident on the light receiving unit 3. The light receiving unit 3 may be, for example, a single photon avalanche diode (SPAD). In the SPAD, an avalanche diode is operated in Geiger mode in which a gain becomes infinite, and can detect even weak light.

Furthermore, the light receiving unit 3 may be an image sensor. The image sensor may be a complementary metal-oxide sensor (CMOS) sensor or a charge coupled device (CCD) sensor.

The control unit 4 illustrated in Fig. 2 controls whether or not to perform light reception by the plurality of light receiving elements 9. For example, in a case where the plurality of light receiving elements 9 is arranged in a first direction (X direction) and a second direction (Z direction) as illustrated in Fig. 1, the control unit 4 sequentially switches a plurality of light receiving element arrays arranged in the second direction to perform light reception. For example, the control unit 4 sequentially switches each light receiving element array from a negative side to a positive side in the Z direction in Fig. 1 to perform light reception. In Fig. 1, the light receiving element array that performs light reception is illustrated by the thick line.

The control unit 4 controls emission timing of the laser beam emitted from the light projection unit 2 and scanning timing of the MEMS mirror 7 in addition to controlling light reception timing of the light receiving unit 3. As illustrated in Fig. 1, the control unit 4 can control an emission direction of the laser beam emitted from the light projection unit 2 along the X direction and can generate the linear beam extending in the X direction by controlling the emission timing of the laser beams emitted from the plurality of laser beam sources. Furthermore, the control unit 4 can cause the linear beam to scan the Z direction by controlling the scanning timing of MEMS mirror 7. Moreover, the control unit 4 can sequentially switch the plurality of light receiving element arrays arranged in the X direction or the Z direction to perform light reception by controlling the light reception timing of the plurality of light receiving elements 9.

In addition, as illustrated in Fig. 2, the distance measuring device 1 according to the present embodiment includes a drive unit 11 and a distance measuring unit 12.

The drive unit 11 drives the light source unit 5 under the control of the control unit 4. The drive unit 11 supplies a power supply voltage to the laser beam source that emits light to cause the laser beam source to emit light. Furthermore, the drive unit 11 stops the supply of the power supply voltage to the laser beam source to be turned off.

The distance measuring unit 12 measures a distance to the object 10 and generates a distance image on the basis of a light reception result of the light receiving unit 3. That is, the distance measuring unit 12 measures the distance to the object 10 on the basis of a time difference between the timing at which the light projection unit 2 emits the laser beam and the timing at which the light receiving unit 3 receives the reflected light corresponding to the laser beam. Furthermore, the distance measuring unit 12 generates the distance image in which color and degree of shading are changed according to the distance to the object 10.

Note that, in a case where the light receiving unit 3 is an image sensor, an image processing unit (not illustrated in Fig. 2) may be provided, and the distance measuring unit 12 may measure the distance to the object 10 on the basis of image data that has undergone image processing by the image processing unit.

As illustrated in Fig. 1, in the present embodiment, the linear beams 5a and 5b emitted from the two light projection units 2 partially overlap each other. In a region where the linear beams 5a and 5b overlap each other, the light intensity of the laser beam is high, so that the distance measurement to a long distance is possible. The reason why the light intensity is increased only in some region is to satisfy the safety standard of the laser beam. The safety standard of the laser beam is different for each country or region, and provides restrictions on wavelength, light intensity, continuous irradiation time, and the like of the laser beam. In the present embodiment, pulsed laser beams are emitted from the two light projection units 2 at predetermined intervals, and a pulse width of the laser beam, that is, the continuous irradiation time or the like satisfies the safety standard of the laser beam. Furthermore, the light intensity of each laser beam pulse also satisfies the safety standard of the laser beam. As described above, while the laser beam pulses satisfying the safety standard of the laser beam are emitted from the two light projection units 2, the linear laser beams emitted from the two light projection units 2 overlap each other in some region, thereby increasing the laser beam intensity in the overlapping region. The higher the intensity of the laser beam is, the easier it is identified from noise light, and the distance to the object 10 located farther can be measured at a high identification rate.

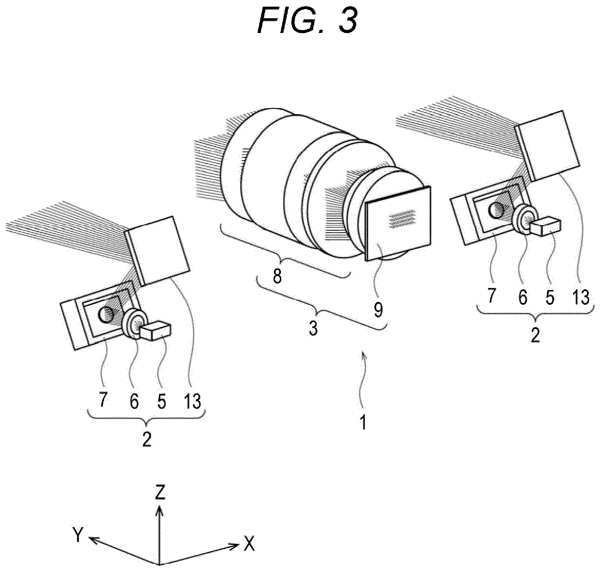

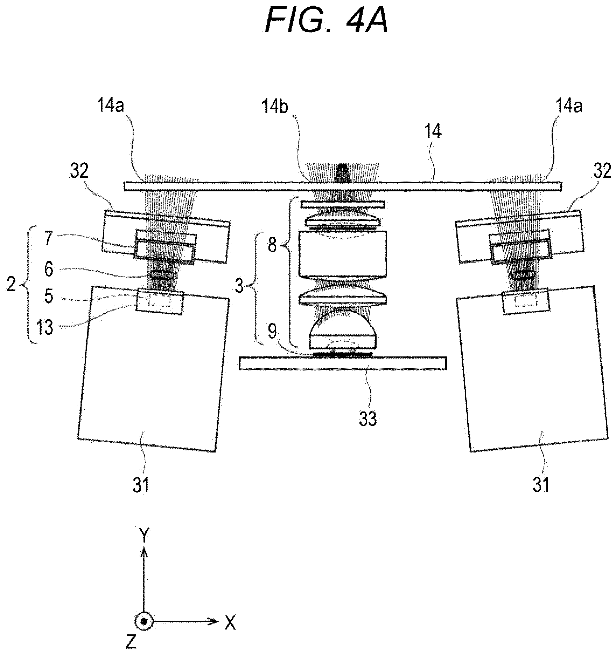

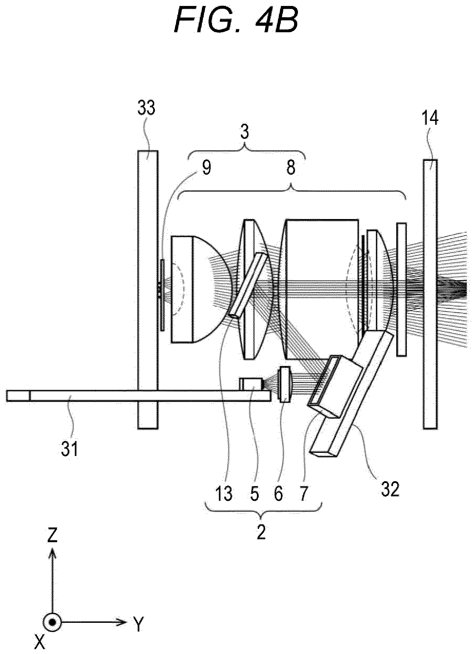

Fig. 3 is a perspective view of a light projection unit 2 and a light receiving unit 3. Furthermore, Fig. 4A is a top view of the light projection unit 2 and the light receiving unit 3 and Fig. 4B is a side view of the light projection unit 2 and the light receiving unit 3 as viewed from a positive side (right side in Fig. 4A) to a negative side (left side in Fig. 4A) in an X direction.

As illustrated in Fig. 3, the two light projection units 2 are arranged at an interval along the X direction. The light receiving unit 3 is disposed at a position substantially equidistant from the two light projection units 2. More specifically, the light receiving unit 3 is disposed along a center line extending in a Y direction through a midpoint of the interval in the X direction between the two light projection units 2. The light receiving unit 3 is not necessarily disposed on the above-described center line, but is desirably disposed at the position equidistant from the two light projection units 2.

As illustrated in Fig. 3, the light projection unit 2 may include a folding mirror (light direction change member) 13 that changes a traveling direction of the laser beam reflected by the MEMS mirror 7. The folding mirror 13 is provided to allow the laser beam reflected by the MEMS mirror 7 to travel toward the object 10. The mirror surface of the folding mirror 13 is fixed, and the light incident on the mirror surface is reflected in a direction corresponding to an incident direction with respect to a normal direction of the mirror surface.

As illustrated in Figs. 4A and 4B, the light source unit 5 is disposed on a first substrate 31, the MEMS mirror 7 is disposed on a second substrate 32, and the light receiving unit 3 is disposed on a third substrate 33. As illustrated in Figs. 4A and 4B, a front panel 14 of the distance measuring device 1 is provided with a first opening portion 14a through which the laser beam from the light projection unit 2 is emitted, and a second opening portion 14b through which the reflected light from the object 10 is received by the light receiving unit 3. The light projection unit 2 and the light receiving unit 3 may be housed in a common housing as an integrated module.

As illustrated in Fig. 4B, the linear laser beam emitted from the light source unit 5 and extending in the X direction scans one direction in the MEMS mirror 7, the light traveling direction is switched by the folding mirror 13, and the laser beam is emitted from the light projection unit 2. The reflected light obtained such that the laser beam is reflected and generated by the object 10 travels in the Y direction and is received by the light receiving unit 3 as illustrated in Fig. 4B.

A beam shape of the laser beam emitted from the light source unit 5 is not circular but elliptical. For this reason, a projection area of the laser beam on the MEMS mirror 7 decreases depending on the direction in which the MEMS mirror 7 is rotated, the reflected light intensity decreases, and there is a possibility that the object identification rate at a distance decreases.

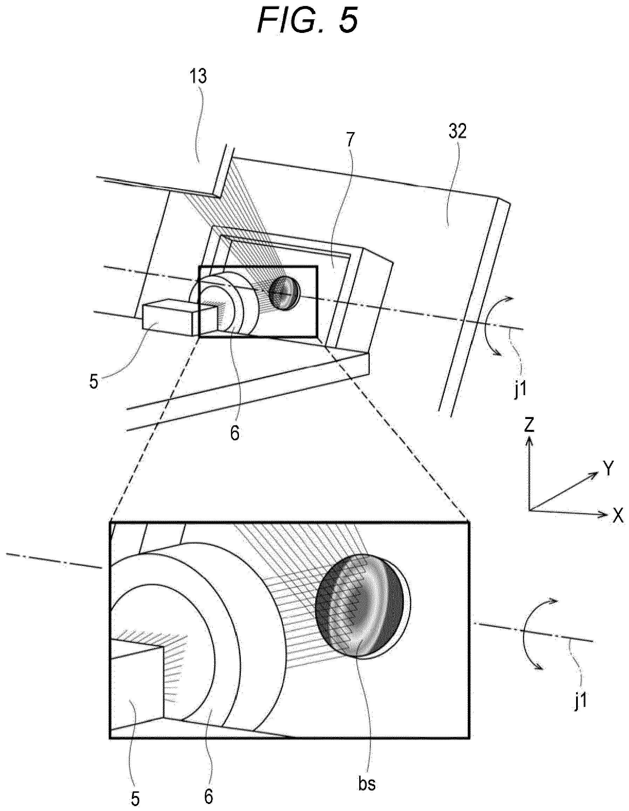

Fig. 5 illustrates an example in which a minor axis direction of a beam spot bs of the laser beam incident on the MEMS mirror 7 from the light source unit 5 is substantially parallel to a rotation axis j1 of the MEMS mirror 7. In this case, when the MEMS mirror 7 is rotated about the rotation axis j1, the projection area of the laser beam on the MEMS mirror 7 decreases and the reflected light intensity decreases, as illustrated in the drawing.

As a method for suppressing the decrease in the light intensity of the MEMS mirror 7, a method of rotating the direction of the beam shape of the laser beam emitted from the light source unit 5 by 90 degrees or rotating the rotation axis j1 of the MEMS mirror 7 by 90 degrees is conceivable. However, to match the direction with the light receiving element array, the rotation direction of the light source unit 5 has to be used in the direction in which the plurality of channels of the laser is arranged in the X-axis direction. Similarly, as for the rotation axis j1 of the MEMS mirror 7, it is necessary to cause the laser beam to scan the Z direction, the rotation axis j1 has to be set to the X axis. That is, the light source unit 5 or the MEMS mirror 7 cannot be rotated so as to form a horizontally long beam on the surface of the MEMS mirror 7.

Under such restrictions, to maximize a light component reflected by the MEMS mirror 7, it is desirable that the MEMS mirror 7 is brought as close as possible to the light source unit 5, and the laser beam is incident as perpendicularly as possible on the MEMS mirror 7.

The reason for this will be described. Since the MEMS mirror 7 is formed by microfabrication, it is difficult to increase the area of the mirror surface capable of reflecting light. Furthermore, since the laser beam has a divergence angle, the laser beam size increases according to the distance. Therefore, if the MEMS mirror 7 is disposed at a position away from the light source unit 5, the light component that cannot be reflected by the MEMS mirror 7 increases, and light use efficiency decreases. Therefore, it is desirable to dispose the MEMS mirror 7 as close as possible to the light source unit 5. Similarly, by increasing the projection area of the laser beam on the MEMS mirror 7 as much as possible, the light component reflected by the MEMS mirror 7 increases, and for this purpose, it is desirable to make the laser beam incident as perpendicularly as possible on the MEMS mirror 7.

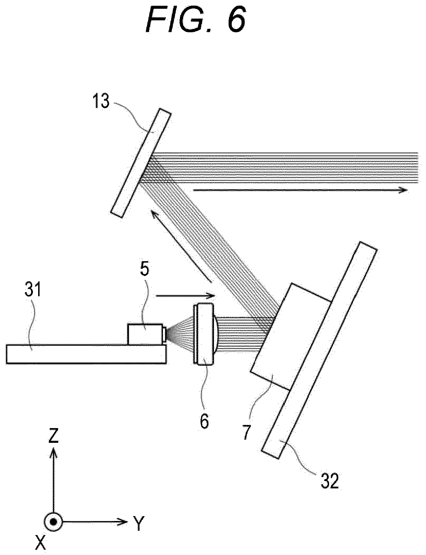

Fig. 6 is a view illustrating the traveling direction of the laser beam in the light projection unit 2. As illustrated in Fig. 6, in the light projection unit 2, the laser beam travels in a zigzag manner in an inverted Z shape. More specifically, an optical path of the laser beam emitted from the light source unit 5 is changed by the MEMS mirror 7, and then changed again by the folding mirror 13. By providing the folding mirror 13, the laser beam can be emitted from the light projection unit 2 in the same direction (Y direction) as the direction of the laser beam emitted from the light source unit 5.

By providing the MEMS mirror 7 immediately after the light projection optical system 6 and setting the arrangement to cause the laser beam to be incident as vertically as possible on the MEMS mirror 7, it is possible to cause the linear laser beam extending in the X direction to scan the Z direction while suppressing a decrease in the light use efficiency. However, this alone cannot cause the light beam to travel in the direction of the object 10. Therefore, the folding mirror 13 with a fixed position is provided, and the laser beam is changed in its direction to travel in the direction of the object 10. For the above reason, the structure of folding back in the inverted Z shape is adopted.

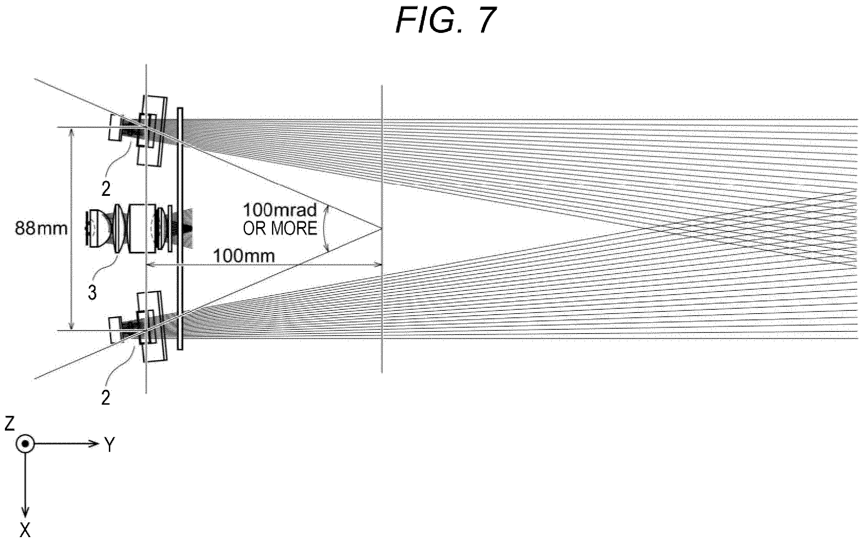

Fig. 7 is a view for describing a positional relationship between the light projection unit 2 and the light receiving unit 3. The interval in the X direction between the two light projection units 2 is, for example, about 88 mm. The light receiving unit 3 is disposed on the center line of a line segment connecting the two light projection units 2. In a case where an angle formed between the two light projection units 2 at the position of 100 mm in front of the MEMS mirror 7 as a scanning center is 100 mrad or more, it is regulated that only one light projection unit 2 having a large influence satisfies the safety standard of the laser beam. Therefore, in the present embodiment, the interval between the two light projection units 2 is set to 88 mm, and the angle between the two light projection units 2 at the position of 100 mm in front of the MEMS mirror 7 is set to 100 mrad or more.

It is also desirable that the emission timing of the laser beam conforms to the following 1) and 2) regulated in the safety standard of the laser beam.

1) In a case where a plurality of laser beam pulses is emitted to the same place within a predetermined period of 5 ps, the plurality of laser beam pulses is regarded as one pulse in total. That is, in the case where a plurality of laser beam pulses is emitted to the same place within 5 µs, a period from the start of emission of the first laser beam pulse to the end of emission of the last laser beam pulse is regarded as the continuous irradiation time. Therefore, the interval of the laser beam pulses emitted to the same place is desirably the predetermined period of 5 µs or more.
2) The time during which the laser beam continuously passes through the eye is emission duration. Therefore, it is desirable to frequently divert the laser beam to the outside of the eye so that the laser beam does not continuously pass through the eye.

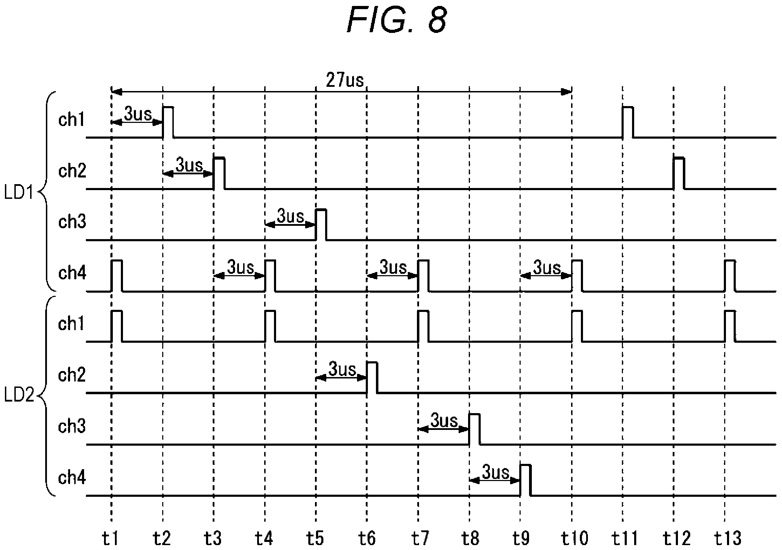

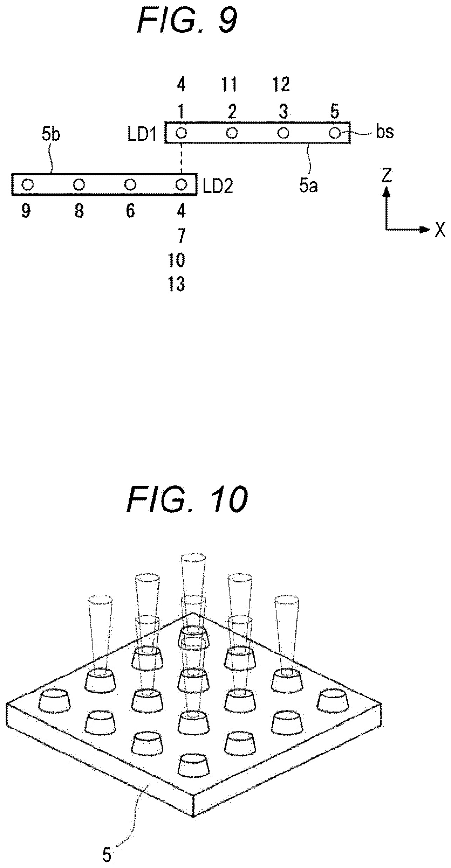

In the present embodiment, the laser beams are emitted from the two light projection units 2 at the emission timing as illustrated in Figs. 8 and 9, conforming to the safety standard of the laser beams illustrated in the above 1) and 2).

Fig. 8 is a waveform chart illustrating an example of the emission timing of the laser beams emitted from the two light projection units 2. In the present specification, the two light projection units 2 may be referred to as the first light projector LD1 and the second light projector LD2. The emission timing of the laser beam of ch4 of one light projection unit 2 (first light projector LD1) and the emission timing of the laser beam of ch1 of another light projection unit 2 (second light projector LD2) are the same. In Fig. 8, the laser beam of ch4 of the first light projector LD1 and the laser beam of ch1 of the second light projector LD2 are respectively emitted every 9 µs (time t1, t4, t7, and t10). The laser beam of ch4 of the first light projector LD1 and the laser beam of ch1 of the second light projector LD2 are emitted to an overlapping region.

The emission timing of the laser beams in other channels is shifted every 3 µs. For example, the laser beam of ch1 of the first light projector LD1 is emitted at time t2, the laser beam of ch2 of the first light projector LD1 is emitted at time t3 that is 3 µs after the time t2, and the laser beam of ch3 of the first light projector LD1 is emitted at time t5 that is 6 µs after the time t3. Furthermore, the laser beam of ch2 of the second light projector LD2 is emitted at time t6, the laser beam of ch3 of the second light projector LD2 is emitted at time t8 that is 6 µs after time t6, and the laser beam of ch4 of the second light projector LD2 is emitted at time t9 that is 3 µs after time t8. The laser beams of the channels other than ch4 of the first light projector LD1 and the laser beams of the channels other than ch1 of the second light projector LD2 are emitted to a region where the two linear beams do not overlap.

As can be seen from Fig. 8, the numbers of times of emission of the laser beams of ch4 of the first light projector LD1 and of ch1 of the second light projector LD2 are larger than those of the laser beams of the other channels. The respective laser beams of ch4 of the first light projector LD1 and ch1 of the second light projector LD2 are emitted to the region where the two linear beams 5a and 5b overlap with each other, as illustrated in Fig. 1. Therefore, by increasing the number of times of emission of the laser beam in this region, the light intensity of the laser beam can be increased, the S/N ratio is improved, and the detectable distance can be increased.

Fig. 9 is a diagram numerically illustrating the order in which the plurality of laser beam sources in the light source unit 5 emits light. Four circles on the right side of Fig. 9 indicate four beam spots bs constituting the linear beam 5a by the laser beams of ch1 to ch4 of the first light projector LD1. Furthermore, four circles on the left side of Fig. 9 indicate four beam spots bs constituting the linear beam 5b by the laser beams of ch1 to ch4 of the second light projector LD2. In practice, the two linear beams are emitted to the same position in the Z direction, but in Fig. 9, the two linear beams are shifted in the Z direction for convenience.

In Fig. 9, the emission positions of the first to twelfth laser beams are indicated by numerals. Note that this emission order is an example, and various modifications are conceivable. As illustrated in Fig. 9, the laser beams (ch4 of the first light projector LD1 and ch1 of the second light projector LD2) emitted to the region where the linear beams 5a and 5b overlap each other are emitted more frequently than the laser beams of the other channels. The laser beams emitted to regions where the linear beams 5a and 5b do not overlap each other are alternately emitted.

Fig. 10 is a view schematically illustrating a case where average light intensity of each channel of the laser beam projected from the light projection unit 2 is equal. As illustrated in the drawing, the light is two-dimensionally emitted from the light projection unit 2, and by increasing the frequency of emitting the laser beam only in some region, the average light intensity can be made higher than that in other regions. Thereby, since the laser beam with high light intensity is emitted to the some region in the distance measurable range, the distance measurement to a long distance becomes possible.

As described above, in the first embodiment, the MEMS mirror 7 capable of performing optical scanning in one-dimensional direction causes the laser beams to perform scanning, which have been emitted from the laser beam sources of the plurality of channels arranged in one direction, and thus the laser beams can be two-dimensionally emitted from the light projection unit 2. In the present embodiment, the laser beams can be emitted in a two-dimensional manner without using an expensive MEMS mirror 7 capable of performing optical scanning in two-dimensional directions, and thus the cost of the light projection unit 2 can be reduced.

Furthermore, in the present embodiment, the light receiving unit 3 including the plurality of light receiving elements 9 arranged in the two-dimensional direction receives the reflected light from the object 10, and the light receiving element 9 that receives the reflected light among the plurality of light receiving elements 9 is controlled by the control unit 4. Therefore, it is not necessary to provide the MEMS mirror 7 on the light receiving side, and the problem of reduction in the amount of received light due to using the MEMS mirror 7 having a small mirror area does not arise. Furthermore, in the present embodiment, the light receiving element 9 that receives the reflected light among the plurality of light receiving elements 9 is electrically switched. Therefore, the light receiving element 9 can be switched more quickly than a case where the light receiving element 9 is optically switched by the MEMS mirror 7.

Moreover, in the present embodiment, the two light projection units 2 and the two light receiving units 3 are arranged in conforming to the safety standard of the laser beam, and the linear beams 5a and 5b emitted from the two light projection units 2 partially overlap each other. Therefore, in the overlapping region, the light intensity of the laser beam can be increased, and the distance measurement to a farther place becomes possible while satisfying the safety standard of the laser beam.

Furthermore, in the present embodiment, the plurality of laser beam sources is provided in the light projection unit 2, and the timing of emitting the laser beam can be controlled for each laser beam source. Therefore, the laser beam can be emitted from each laser beam source at the emission timing at which the light intensity can be further increased while satisfying the safety standard of the laser beam. In particular, the laser beam source that emits the laser beam to the region where the linear beams 5a and 5b overlap each other increases the number of times of emission of the laser beam as compared with the other laser beam sources. Therefore, the light intensity can be increased and the distance measurement to a long distance becomes possible.

### (Second Embodiment)

A second embodiment is different from the first embodiment in the configuration of the light projection unit 2.

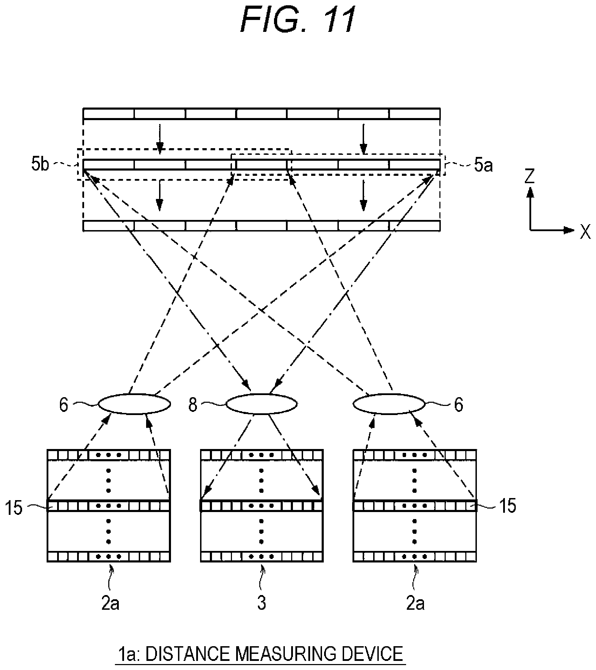

Fig. 11 is a diagram illustrating a main part of a distance measuring device 1a according to a second embodiment. As illustrated in Fig. 11, a distance measuring device 1a according to the second embodiment is different from the distance measuring device 1 according to the first embodiment in including a light projection unit 2a in which vertical cavity surface emitting lasers (VCSELs) 15 are two-dimensionally arranged. The configuration other than the light projection unit 2a is similar to that of the distance measuring device 1 illustrated in Figs. 1 and 2. Note that, since the light projection unit 2a includes the plurality of VCSELs 15, a control method by a control unit 4 and a drive method by a drive unit 11 are also different from those in Fig. 2.

The distance measuring device 1a of Fig. 11 includes two light projection units 2a arranged to be spaced apart in an X direction, and each light projection unit 2a includes a plurality of the two-dimensionally arranged VCSELs 15. The control unit 4 can individually control whether or not to cause each of the plurality of VCSELs 15 to emit light.

The control unit 4 may cause the plurality of VCSELs 15 arranged in the X direction and the Z direction in each light projection unit 2a to emit light for each channel, and drive a plurality of light receiving elements 9 in a light receiving unit 3 for each channel in accordance with light emission timing and the channel to receive reflected light.

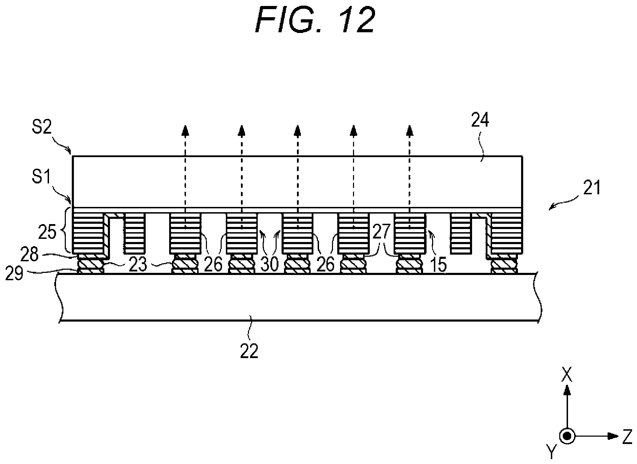

Fig. 12 is a cross-sectional view illustrating an example of a cross-sectional structure of the light projection unit 2. The light projection unit 2 in Fig. 12 includes a plurality of VCSELs. As illustrated in Fig. 12, the light projection unit 2 bonds a light emitting chip 21 onto a first substrate 22 by a bump 23. The light emitting chip 21 includes a second substrate 24, a laminated film 25, a light emitting element 26 disposed on a part of the laminated film 25, an anode electrode 27, and a cathode electrode 28. Furthermore, a connection pad 29 is provided on a front surface of the first substrate 22. A plurality of the light emitting elements 26, the anode electrodes 27, the cathode electrodes 28, and the connection pads 29 is provided.

The laminated film 25 includes a plurality of layers laminated on a front surface S1 of the second substrate 24. Examples of these layers include an n-type semiconductor layer, an active layer, a p-type semiconductor layer, a light reflecting layer, an insulating layer having a light emission window, and the like. The laminated film 25 includes a plurality of mesa portions 30 protruding in -X direction. Some of the mesa portions 30 are the plurality of light emitting elements 26.

The plurality of light emitting elements 26 constitutes a part of the laminated film 25, and is provided on the front surface S1 side of the substrate 24. Each light emitting element 26 of the present embodiment has a VCSEL structure and emits light in +X direction. As illustrated in Fig. 12, the light emitted from each light emitting element 26 passes through the inside of the second substrate 24 from the front surface S1 to a back surface S2, and is emitted from the second substrate 24.

The anode electrode 27 is formed on a lower surface of the light emitting element 26. The cathode electrode 28 is formed on a lower surface of the mesa portion 30 and extends to a lower surface of the laminated film 25 between the mesa portions 30. Each light emitting element 26 emits light when a current flows between the anode electrode 27 and the corresponding cathode electrode 28.

As described above, the light emitting chip 21 is disposed on the first substrate 22 via the bump 23, and is electrically connected to the first substrate 22 by the bump 23. Specifically, the bump 23 is bonded to the connection pad 29 on the first substrate 22, and the mesa portion 30 is disposed on the connection pad 29 via the bump 23. Each mesa portion 30 is disposed on the bump 23 via the anode electrode 27 or the cathode electrode 28. The substrate 22 is, for example, a semiconductor substrate such as a silicon (Si) substrate.

As described above, in the distance measuring device 1 according to the second embodiment, by forming the light projection unit 2 into the VCSEL structure, the entire light projection unit 2 can be formed into a chip, a MEMS mirror 7 and a folding mirror 13 are unnecessary, and an optical structure of the light projection unit 2 is simplified.

The control unit 4 can individually control whether or not to cause the plurality of VCSELs arranged in the two-dimensional direction in the light projection unit 2 to emit light, and can emit a linear beam similar to that in the first embodiment from the light projection unit 2. Therefore, linear beams 5a and 5b emitted from the two light projection units 2 can partially overlap each other, and light intensity of the laser beam can be improved in an overlapping region, so that a distance of a distant object 10 can be measured similarly to the first embodiment.

In the first embodiment, the emission of the linear beam in the light projection unit 2 is optically controlled, but in the second embodiment, both the light projection unit 2 and the light receiving unit 3 perform emission control of the laser beam in two-dimensional directions and light reception control of the reflected light from the two-dimensional directions by electrical control, so that scanning direction and light receiving position of the laser beam can be quickly switched.

Note that the present technology can also have the following configurations.
(1) A distance measuring device including:
   a light projection unit configured to emit light in a two-dimensional manner;
   a light receiving unit including a plurality of light receiving elements arranged in a two-dimensional direction; and
   a control unit configured to control whether or not to perform light reception by the plurality of light receiving elements.
(2) The distance measuring device according to (1), in which the light projection unit emits a linear beam extending in a first direction and causes the linear beam to scan a second direction.
(3) The distance measuring device according to (2), in which
   the plurality of light receiving elements is arranged in the first direction and the second direction, and
   the control unit sequentially switches the plurality of light receiving elements arranged in the first direction and the second direction to receive light.
(4) The distance measuring device according to any one of (1) to (3), in which
   the light projection unit includes
   a light source unit that emits a laser beam,
   an optical system that allows the laser beam to pass through, and
   a micro electro mechanical system (MEMS) mirror that controls a traveling direction of the laser beam having passed through the optical system.
(5) The distance measuring device according to (4), in which the MEMS mirror controls the traveling direction of the laser beam having passed through the optical system in a one-dimensional direction.
(6) The distance measuring device according to (4) or (5), in which the light projection unit includes a light direction change member that changes a direction of the laser beam reflected by the MEMS mirror.
(7) The distance measuring device according to (6), in which the direction of the laser beam reflected by the light direction change member is parallel to the laser beam emitted from the light source unit.
(8) The distance measuring device according to any one of (1) to (3), in which
   the light projection unit includes a plurality of light source units arranged in a two-dimensional direction, and
   each of the plurality of light source units is capable of individually switching whether or not to emit a laser beam.
(9) The distance measuring device according to (8), in which the control unit individually controls turning on or off of the plurality of light source units every predetermined period.
(10) The distance measuring device according to any one of (1) to (3), in which
   the light projection unit includes a first light projector and a second light projector arranged to be spaced apart along a predetermined direction, and
   each of the first light projector and the second light projector emits a linear beam extending in a first direction and causes the linear beam to scan a second direction.
(11) The distance measuring device according to (10), in which the first light projector and the second light projector are arranged to be spaced apart in the predetermined direction such that the linear beam extending in the first direction from the first light projector and the linear beam extending in the second direction from the second light projector partially overlap each other.
(12) The distance measuring device according to (10) or (11), in which the light receiving unit is disposed at a position having a substantially equal distance from each of the first light projector and the second light projector.
(13) The distance measuring device according to any one of (10) to (12), in which
   each of the first light projector and the second light projector includes
   a light source unit that emits a laser beam,
   an optical system that allows the laser beam to pass through, and
   a MEMS mirror that controls a traveling direction of the laser beam having passed through the optical system.
(14) The distance measuring device according to (13), in which an angle formed by a direction toward the first light projector and a direction toward the second light projector at a position of 100 mm along a center line of a line segment connecting the two MEMS mirrors is 100 mrad or more.
(15) The distance measuring device according to (13) or (14), in which each of the first light projector and the second light projector includes a light direction change member that changes a direction of the laser beam reflected by the MEMS mirror.
(16) The distance measuring device according to (6) or (15), in which the light direction change member is a reflecting mirror having a reflecting surface with a fixed inclination angle.
(17) The distance measuring device according to any one of (10) to (13), in which
   each of the first light projector and the second light projector includes a plurality of light source units arranged in a two-dimensional direction, and
   each of the plurality of light source units is capable of individually switching whether or not to emit a laser beam.
(18) The distance measuring device according to (4), (5), (14), or (15), in which
   the light source unit includes a plurality of laser beam sources arranged in one direction, and
   the MEMS mirror causes the laser beam emitted from the plurality of laser beam sources to scan a direction different from an arrangement direction of the plurality of laser beams.
(19) The distance measuring device according to (18), in which
   a beam shape of the laser beam emitted from the laser beam source is an elliptical shape, and
   the MEMS mirror is rotated about a rotation axis extending along a minor axis direction of the elliptical shape.
(20) The distance measuring device according to any one of (1) to (19), in which
   the light receiving unit receives reflected light obtained by reflecting the light emitted from the light projection unit by an object, and
   the distance measuring device further including: a distance measuring unit configured to measure a distance to the object by a time difference between time at which the light projection unit emits the light and time at which the light emitted from the light projection unit is reflected by the object and received by the light receiving unit.

The modes of the present disclosure are not limited to the above-described individual embodiments, and also include various modifications conceivable by those skilled in the art, and the effects of the present disclosure are not limited to the above-described content. That is, various additions, changes, and partial deletions are possible without departing from the conceptual idea and gist of the present disclosure derived from the content defined in the claims and its equivalents.

### REFERENCE SIGNS LIST

- 1: Distance measuring device
- 2: Light projection unit
- 3: Light receiving unit
- 4: Control unit
- 5: Light source unit
- 6: Light projection optical system
- 7: MEMS mirror
- 8: Light receiving optical system
- 9: Light receiving element
- 10: Object
- 11: Drive unit
- 12: Distance measuring unit
- 13: Folding mirror
- 14: Front panel
- 14a: First opening portion
- 14b: Second opening portion
- 15: VCSEL
- 21: Light emitting chip
- 22: First substrate
- 23: Bump
- 24: Second substrate
- 25: Laminated film
- 26: Light emitting element
- 27: Anode electrode
- 28: Cathode electrode
- 29: Connection pad
- 30: Mesa portion

## Claims

1. A distance measuring device comprising:
a light projection unit configured to emit light in a two-dimensional manner;
a light receiving unit including a plurality of light receiving elements arranged in a two-dimensional direction; and
a control unit configured to control whether or not to perform light reception by the plurality of light receiving elements.

2. The distance measuring device according to claim 1, wherein the light projection unit emits a linear beam extending in a first direction and causes the linear beam to scan a second direction.

3. The distance measuring device according to claim 2, wherein
the plurality of light receiving elements is arranged in the first direction and the second direction, and
the control unit sequentially switches the plurality of light receiving elements arranged in the first direction and the second direction to receive light.

4. The distance measuring device according to claim 1, wherein
the light projection unit includes
a light source unit that emits a laser beam,
an optical system that allows the laser beam to pass through, and
a micro electro mechanical system (MEMS) mirror that controls a traveling direction of the laser beam having passed through the optical system.

5. The distance measuring device according to claim 4, wherein the MEMS mirror controls the traveling direction of the laser beam having passed through the optical system in a one-dimensional direction.

6. The distance measuring device according to claim 4, wherein the light projection unit includes a light direction change member that changes a direction of the laser beam reflected by the MEMS mirror.

7. The distance measuring device according to claim 6, wherein the direction of the laser beam reflected by the light direction change member is parallel to the laser beam emitted from the light source unit.

8. The distance measuring device according to claim 1, wherein
the light projection unit includes a plurality of light source units arranged in a two-dimensional direction, and
each of the plurality of light source units is capable of individually switching whether or not to emit a laser beam.

9. The distance measuring device according to claim 8, wherein the control unit individually controls turning on or off of the plurality of light source units every predetermined period.

10. The distance measuring device according to claim 1, wherein
the light projection unit includes a first light projector and a second light projector arranged to be spaced apart along a predetermined direction, and
each of the first light projector and the second light projector emits a linear beam extending in a first direction and causes the linear beam to scan a second direction.

11. The distance measuring device according to claim 10, wherein the first light projector and the second light projector are arranged to be spaced apart in the predetermined direction such that the linear beam extending in the first direction from the first light projector and the linear beam extending in the first direction from the second light projector partially overlap each other.

12. The distance measuring device according to claim 10, wherein the light receiving unit is disposed at a position having a substantially equal distance from each of the first light projector and the second light projector.

13. The distance measuring device according to claim 10, wherein
each of the first light projector and the second light projector includes
a light source unit that emits a laser beam,
an optical system that allows the laser beam to pass through, and
a MEMS mirror that controls a traveling direction of the laser beam having passed through the optical system.

14. The distance measuring device according to claim 13, wherein an angle formed by a direction toward the first light projector and a direction toward the second light projector at a position of 100 mm along a center line of a line segment connecting the two MEMS mirrors is 100 mrad or more.

15. The distance measuring device according to claim 13, wherein each of the first light projector and the second light projector includes a light direction change member that changes a direction of the laser beam reflected by the MEMS mirror.

16. The distance measuring device according to claim 6, wherein the light direction change member is a reflecting mirror having a reflecting surface with a fixed inclination angle.

17. The distance measuring device according to claim 10, wherein
each of the first light projector and the second light projector includes a plurality of light source units arranged in a two-dimensional direction, and
each of the plurality of light source units is capable of individually switching whether or not to emit a laser beam.

18. The distance measuring device according to claim 4, wherein
the light source unit includes a plurality of laser beam sources arranged in one direction, and
the MEMS mirror causes the laser beam emitted from the plurality of laser beam sources to scan a direction different from an arrangement direction of the plurality of laser beams.

19. The distance measuring device according to claim 18, wherein
a beam shape of the laser beam emitted from the laser beam source is an elliptical shape, and
the MEMS mirror is rotated about a rotation axis extending along a minor axis direction of the elliptical shape.

20. The distance measuring device according to claim 1, wherein
the light receiving unit receives reflected light obtained by reflecting the light emitted from the light projection unit by an object, and
the distance measuring device further comprising: a distance measuring unit configured to measure a distance to the object by a time difference between time at which the light projection unit emits the light and time at which the light emitted from the light projection unit is reflected by the object and received by the light receiving unit.
